# DEMANDE DE BREVET EUROPEEN

(11) **EP 2 134 060 A1**
(43) Date de publication de la demande: **16.12.2009**
(21) Numéro de dépôt: 09161035.2
(22) Date de dépôt: 25.05.2009
(51) Int. Cl.: H04L 29/06

(54) **Procédé et système de communication Internet dans lequel un appelé peut choisir suivant quelle modalité il veut être joint**

(30) Priorité: 10.06.2008 FR 0853827
(71) Demandeur: Alcatel Lucent, 75008 Paris (FR)
(72) Inventeur: Aidan, Bruno, 91620 Nozay (FR); Boussard, Mathieu, 91620 Nozay (FR); Poussière, Fabrice, 91620 Nozay (FR); Billault, Vincent, 91620 Nozay (FR); Jabaud, Philippe, 91620 Nozay (FR); Labrogere, Paul, 91620 Nozay (FR)
(74) Mandataire: Hedarchet, Stéphane

(57) **Abrégé**

Dans le procédé de communication, un dispositif (52) prépare un kit de connexion à un appelé (10) avec lequel un appelant prédéterminé (8) souhaite communiquer. Ce kit est fonction d'au moins un choix effectué par l'appelé.

## Description

L'invention concerne les télécommunications via un réseau, en particulier le réseau Internet.

Il existe aujourd'hui de nombreuses possibilités pour organiser des communications personnelles via le réseau internet. Toutefois, les solutions disponibles soulèvent des problèmes d'interopérabilité, de mise à l'échelle, de capacité à joindre les interlocuteurs souhaités et enfin de compatibilité avec des programmes et applications existants.

On connaît ainsi des solutions de communication sous les marques Skype, MSN, Yahoo Messenger, Jajah, Ribit et Gtalk (seul ou dans le cadre du système Gmail).

Ces solutions fonctionnent toutes plus ou moins avec des protocoles propriétaires de sorte qu'elles génèrent de facto des communautés d'utilisateurs. Toutefois ces communautés peuvent rencontrer des problèmes d'interopérabilité pour communiquer avec d'autres communautés attachées à d'autres solutions. De plus, ces procédés connus couvrent un nombre fixe et donc limité de modes de communication (communication sans connexion, ou en temps réel, voix sur IP, etc.). Mais en raison de l'aspect propriétaire des solutions retenues, il est difficile de faire évoluer les procédés en question pour pallier ce problème.

En outre, la plupart de ces solutions soulèvent des problèmes de mise à l'échelle ou de dimensionnement. En effet, elles dépendent d'une infrastructure spécifique (telle qu'un serveur de registre, parfois même un serveur de média). Ces solutions s'exposent donc à des risques de saturation lorsque le nombre d'utilisateurs augmente. A l'inverse, lorsque cette augmentation n'a lieu que temporairement, ces procédés obligent à surdimensionner les dispositifs utilisés, en augmentant ainsi le coût. Pour les solutions les plus légères telles que Gtalk, le noyau du système est constitué par un serveur. Mais ce noeud forme alors la partie critique du système : si le serveur connaît une avarie, c'est l'ensemble du service qui est interrompu.

Les procédés connus se heurtent à une autre difficulté : ils ne permettent pas de disposer d'un système dans lequel un appelé peut choisir comment et dans quelle mesure il peut être contacté. En fait, la plupart des procédés connus sont calqués sur le modèle de l'ancien téléphone où un appelant utilise un identifiant pour atteindre un appelé, ce qui laisse peu de marges de manoeuvre à ce dernier pour choisir selon quelles modalités il accepte d'être contacté. Ce problème peut se traduire par la nécessité de ne jamais publier un identifiant d'appel fixe (numéro de téléphone, adresse SIP (*Session Initiation Protocole* ou protocole d'ouverture de session),...) pour laisser à l'appelé la possibilité de choisir suivant quelle modalité il veut être joint.

Nous précisons ici que, dans le cadre de la présente demande, on désigne par "appelant" un utilisateur ou une machine qui cherche à établir une communication avec un autre utilisateur ou une autre machine. On désigne ce dernier ou cette dernière par "appelé", étant entendu que la tentative de l'appelant peut se solder par un échec, par exemple si l'appelé ne peut pas ou ne veut pas être mis en communication avec l'appelant. Même si la mise en connexion ou en communication n'a pas lieu, nous désignons la personne ou la machine à joindre par "appelé".

Finalement, un dernier problème réside dans le souhait de rendre le procédé utilisé compatible avec d'autres protocoles et applications de communication. Mais les utilisateurs veulent souvent pouvoir adapter leur communication au contexte dans lequel elle est réalisée. Ainsi, indiquer une coordonnée sur un curriculum vitae n'a pas le même but que de transmettre une coordonnée à ses amis. Or il est difficile d'offrir une réponse adaptée à toutes les circonstances d'utilisation car toutes ces dernières doivent être envisagées avant de concevoir le procédé destiné à y répondre.

Pour pallier ces problèmes, des solutions ont été proposées comme le principe du bouton "appelle-moi" que l'on rencontre sur les procédés de Jajah ou de Google Chatback.

Le système Jajah utilise Internet comme un canal intermédiaire entre des systèmes de type RTCP (Réseau Téléphonique Commuté Public) de sorte que les utilisateurs doivent disposer d'un téléphone mobile pour s'en servir. En fait, le procédé Jajah exploite le web pour déclencher des communications et les établir. Ce système est dépendant des numéros de téléphone des utilisateurs et de leur localisation (ce qui induit un problème de mise à l'échelle). De plus, il doit prendre en compte de nombreux protocoles propriétaires pour permettre un appel vers d'autres clients (problème d'interopérabilité). Finalement, le système de Jajah contrôle le numéro de téléphone de l'appelé de sorte que ce dernier ne peut pas choisir s'il veut être joint. L'appelé peut seulement utiliser des paramètres et des configurations définis par Jajah tels que l'intervalle de temps auquel il peut être joint par exemple.

Le service Google Chatback permet à ses utilisateurs d'insérer dans une page web (par exemple dans un blog) un bouton qui permet au visiteur d'initier une session de chat avec l'utilisateur en utilisant son compte de chat sur Google. Cette solution est largement compatible avec d'autres programmes et applications mais ne permet pas à l'utilisateur de définir différents contextes d'utilisation et donc de maîtriser parfaitement de quelle façon il souhaite être joint. Ainsi, il ne pourrait pas décider d'accepter un appel venant de son curriculum vitae en ligne mais de refuser un appel venant de son blog.

Un but de l'invention est d'améliorer les procédés de communication.

A cet effet, on prévoit selon l'invention un procédé de communication dans lequel un dispositif prépare un kit de connexion à un appelé avec lequel un appelant prédéterminé souhaite communiquer, ce kit étant fonction d'au moins un choix effectué par l'appelé.

Le procédé pourra présenter en outre au moins l'une quelconque des caractéristiques suivantes :
- l'étape de préparation a lieu après que l'appelant a activé un lien relatif à l'appelé
- un serveur pointé par le lien transmet un identifiant du lien à un dispositif;
- un dispositif consulte des données relatives à des modalités de connexion de l'appelé ;
- un serveur envoie le kit à l'appelant ; et
- un serveur de connexion connecte l'appelant à l'appelé .

On prévoit également selon l'invention une page qui comprend un lien apte à déclencher la mise en oeuvre d'un procédé selon l'invention.

On prévoit de plus selon l'invention un programme qui comprend des instructions aptes à commander l'exécution des étapes d'un procédé selon l'invention ou l'affichage sur un écran d'une page selon l'invention, lorsqu'il est exécuté sur un ordinateur.

On prévoit également selon l'invention un support d'enregistrement de données qui comprend un programme selon l'invention.

On prévoit en outre selon l'invention une mise à disposition sur un réseau de télécommunication d'un programme selon l'invention en vue de son téléchargement.

On prévoit enfin selon l'invention un système de communication qui comprend des moyens pour préparer un kit de connexion à un appelé avec lequel un appelant prédéterminé souhaite communiquer, ce kit étant préparé en fonction d'au moins un choix effectué par l'appelé.

Le système selon l'invention pourra présenter en outre au moins l'une quelconque des caractéristiques suivantes :
- il comprend un registre reliant des identifiants de lien et des appelés potentiels et de préférence plusieurs identifiants à un même appelé;
- il comprend, pour chaque lien, des données relatives à des modalités de connexion de l'appelé au moyen du lien;
- il comprend des ressources pour une connexion aux appelés potentiels ; et
- il est apte à connecter l'appelant à l'appelé.

D'autres caractéristiques et avantages de l'invention apparaîtront encore dans la description suivante d'un mode préféré de réalisation donné à titre d'exemple non limitatif en référence aux dessins annexés sur lesquels :
- les figures 1 et 2 sont deux schémas illustrant sommairement la mise en communication d'un appelé et d'un appelant au moyen de l'invention dans deux exemples d'utilisation ;
- la figure 3 est un schéma illustrant la modélisation des données exploitées dans le cadre de l'invention ;
- la figure 4 est un schéma montrant l'architecture du système selon un mode préféré de réalisation de l'invention au sein d'un réseau de télécommunication ; et
- la figure 5 est un schéma illustrant les différentes étapes du procédé.

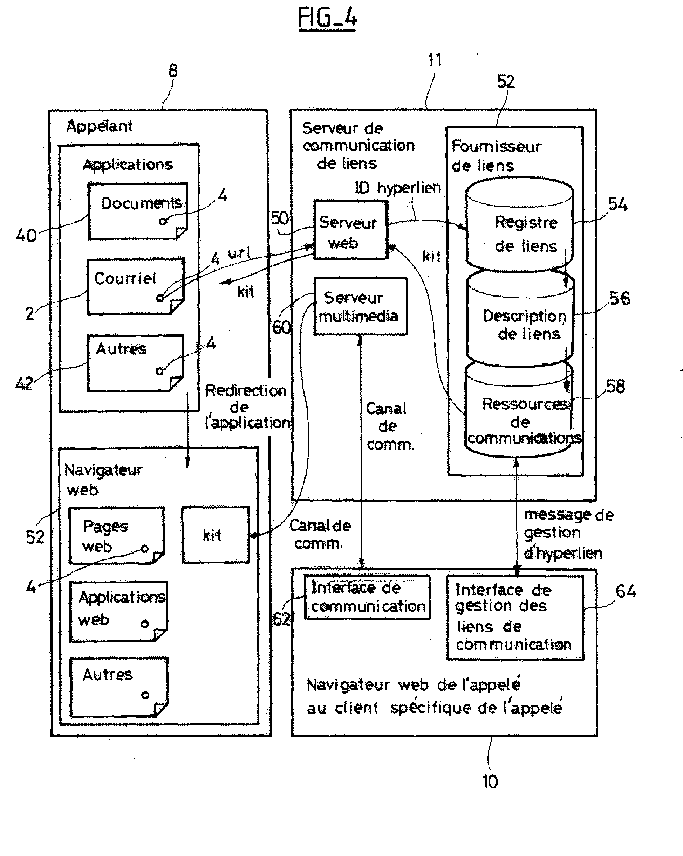

Comme on va le voir, l'invention traite différemment les appelants et les appelés en mettant en oeuvre un système orienté appelés. A cette fin, l'invention permet aux futurs appelés d'organiser leurs liens de mise en communication en vue d'être contactés par ce biais. On utilise ici indifféremment le terme "lien" ou "hyperlien". La notion de lien renvoie à celle de lien hypertexte connue dès l'origine du développement d'Internet. Un lien est ici une partie d'une page d'un document, d'un courriel, d'une application, d'un répertoire ou liste d'adresses, d'un site Internet ou d'un autre objet. Le lien de communication est publié et disponible pour l'appelant. Cette page comprend notamment une adresse URL pointant vers un serveur web prédéterminé. C'est ainsi le cas sur la figure 4 de la page 2 formée par un courriel qui comprend un lien 4 pointant vers un serveur 50.

Dans la cadre de l'invention, l'utilisateur 8 désigné par "appelant" qui souhaite joindre un autre utilisateur 10 désigné par "appelé", active ce lien 4 en vue d'établir cette communication. Cette activation se fait par exemple en cliquant ou pointant le lien à l'écran avec un dispositif tel qu'une souris.

De tels liens de communication 4 sont ainsi exploités et "consommés" par l'appelant qui disposera à cette fin d'un ensemble minimum de ressources. Il s'agira notamment de ressources matérielles telles d'un ordinateur muni d'un navigateur Internet, d'un microphone et d'une caméra. Toutefois, comme on va le voir, hormis ces ressources minimales et basiques, les ressources supplémentaires qui seront probablement nécessaires à l'appelant pour établir la communication vont lui être fournies grâce à l'appelé. Il s'agit par exemple de logiciels, de codecs, de comptes et d'extensions de navigateur. Il peut s'agir de certificats (clé, login, mot de passe) délivrés par un opérateur suite à la création d'un compte auprès de lui. Ces ressources supplémentaires vont être fournies sur la base d'une description du lien 4 qui aura été faite préalablement par l'appelé 10 ou à son initiative, lors de la mise en place de ce lien. L'appelant 8 peut donc exploiter le lien de communication sans avoir acquis ou obtenu préalablement des ressources matérielles ou logicielles supplémentaires et en particulier sans étape préalable d'installation ou de souscription à un service. Ainsi, le lien est apte à déclencher l'établissement d'une communication en fonction des modalités souhaitées par l'appelé et sans que l'appelant ne doive, préalablement à l'activation du lien, obtenir des ressources complémentaires.

Lorsque l'appelant 8 active le lien 4, un serveur de communication par lien 11 examine une description du lien et évalue les règles associées à ce lien pour décider si la communication peut être établie. Si oui, le serveur 11 choisit une ou plusieurs ressources de communication parmi des ressources disponibles en rapport avec ce lien et prépare un kit de communication qui comprend ces ressources.

Les ressources sont par exemple des données et/ou des programmes sous la forme de codes, de codecs, de données associées pour un appel vidéo ou une session de messagerie instantanée et plus généralement pour toute action de communication. Les données peuvent être des données de présentation et de communication.

Le serveur 11 adresse ensuite ce kit de communication à l'appelant 8. Le kit est alors interprété par le dispositif de l'appelant 8 en vue d'établir la communication.

L'invention tire parti du fait que les utilisateurs disposent déjà le plus souvent des ressources de communication de base. Par exemple, de nos jours, 95 % des utilisateurs disposent d'une application FLASH qui leur donne une capacité multimédia d'accéder à de nombreuses fonctionnalités. Il en est de même pour l'application Java qui offre aux utilisateurs une capacité multimédia d'accéder à de nombreuses applications. C'est pourquoi des ressources de communication s'appuyant sur ce type de technologie ne nécessitent pas d'effectuer une installation supplémentaire préalable du côté de l'appelant pour être mises en oeuvre par ce dernier.

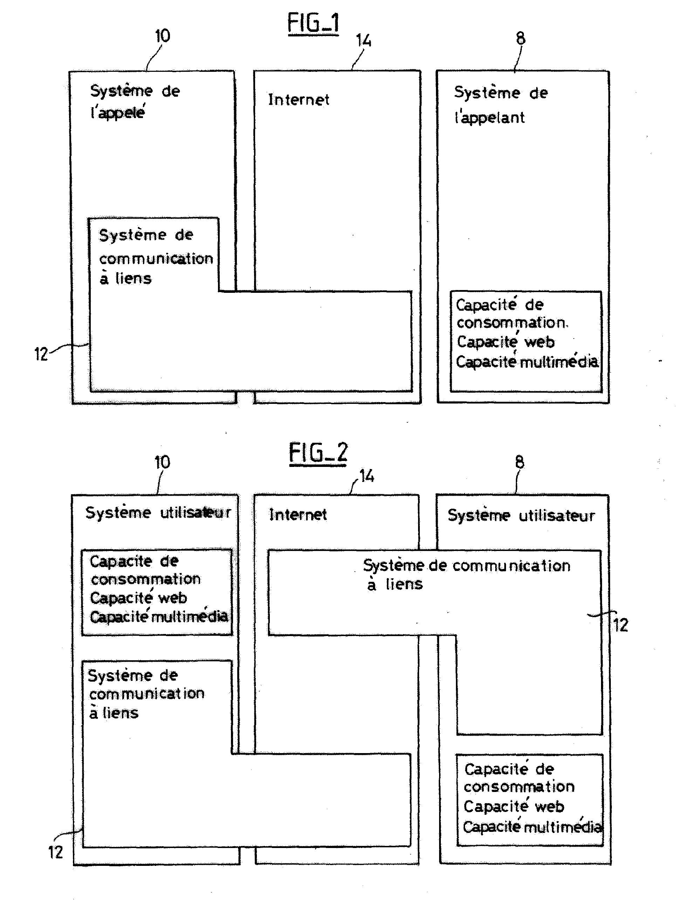

On a illustré à la figure 1 le principe du système de communication par liens selon l'invention. Les ressources de communication sont placées sous le contrôle de l'appelé 10. C'est lui qui a la maîtrise du système de communication par liens 12 qui sera exploité par l'appelant 8. Ce dernier dispose d'une capacité minimale en termes de matériel, de logiciels et d'applications par exemple pour consommer des liens, pour interagir avec le web et pour exploiter des applications multimédia. C'est par l'intermédiaire d'un réseau tel que le réseau Internet 14 que le procédé selon l'invention va être mis en oeuvre. Un tel système peut sans difficulté être exploité à grande échelle car il transfère une partie du travail du côté des appelés. De plus, ce système a pour avantage d'être particulièrement propice à l'interopérabilité dans la mesure où c'est seulement le minimum de ressources additionnelles nécessaires qui est fourni à l'appelant 8.

On remarquera que le système peut prendre une configuration symétrique comme illustré à la figure 2. Cette dernière illustre deux systèmes de communication par lien 12 qui peuvent obéir à des programmes différents. L'un des utilisateurs 10 est l'appelé pour l'une des communications et le système 12 associé. Le deuxième utilisateur 8 est l'appelant à cet égard. Mais pour l'autre communication et l'autre système 12, c'est l'utilisateur 10 qui devient appelant tandis que l'utilisateur 8 devient l'appelé. On observera que les deux systèmes 12 peuvent être différents tout en mettant simultanément en relation les deux utilisateurs 8 et 10. De plus, chacun des deux systèmes peut être étendu à des échelles différentes l'une de l'autre. On voit en particulier que chacun des deux utilisateurs peut fonctionner simultanément avec les deux systèmes de communication par lien. Par exemple, l'un des systèmes sert à établir une liaison vocale tandis que l'autre système constitue une messagerie instantanée.

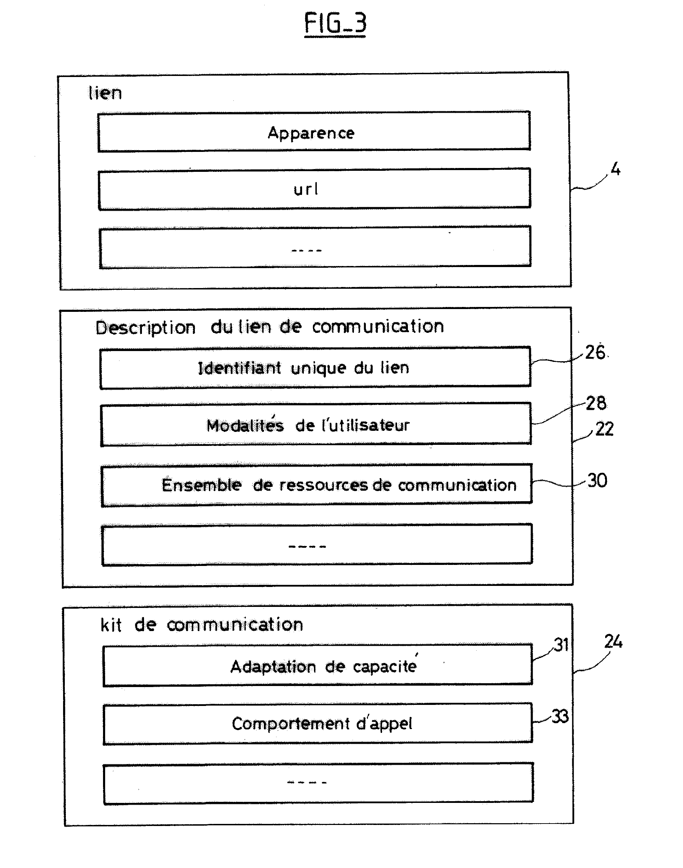

On va maintenant présenter en référence à la figure 3 le modèle sur lequel repose l'invention dans le présent mode de réalisation. Ce modèle comprend trois couches dénommées respectivement "lien" 4, "description du lien de communication" 22 et "kit de communication" 24. Ce modèle est conçu de sorte que les navigateurs web soient en mesure de l'interpréter et qu'il puisse être décrit en termes de schéma XML ou DTD (Document Type Definition).

Le lien 4 formant la première couche constitue le lien ou hyperlien classique que l'on trouve dans des pages web. Un utilisateur peut cliquer sur un tel lien pour lancer une requête http dans son navigateur web (il s'agit en l'espèce d'une requête de type "get" qui est adressée à un serveur web). Le lien pourra prendre des formes variées. Il pourra s'agir d'une image cliquable, d'un texte, d'un bouton ou autre. Le lien 4 peut être formé par un fichier FLASH ou par une description XML. On pourra lui associer des caractéristiques supplémentaires telles qu'une apparence ou un rendu multi-états. De préférence, il s'agira d'un bouton pouvant avoir trois types d'apparences : disponible, non disponible, cliqué ou pointé. De même, le lien pourra être prévu pour afficher un indicateur de présence de l'utilisateur.

La deuxième couche 22 est la description du lien de communication. Elle comprend trois sous-couches principales.

La première référencée 26 comprend l'identifiant unique du lien. Cette sous-couche sert à différencier les liens les uns des autres de sorte que chaque lien soit unique. Elle fait correspondre un lien à l'appelé potentiel associé. Lorsqu'un même appelé potentiel est associé à plusieurs liens 4, cette sous-couche relie à l'appelé tous les liens le concernant.

La deuxième sous-couche 28 est la description des modalités de connexion à l'utilisateur. Ce champ décrit ainsi quel type de disponibilité est associé au lien. De nombreuses possibilités sont envisageables à cet égard telles que la durée de la disponibilité, le nombre d'utilisations, avec ou sans contrôle par l'appelé, obtention de surnoms,... Cette partie de la description est examinée par le fournisseur de liens 52 pour décider quelles ressources de communication doivent être insérées dans le kit à destination de l'appelant.

La troisième sous-couche 30 comprend des ressources de communication (ou des références à celles-ci). A cette fin, l'appelé a organisé ou fait organiser un ensemble de ressources de communication. Il peut s'agir de logiciels permettant des applications pratiques telles que : la messagerie instantanée, l'appel audio, l'appel vidéo, une liste personnelle de liens, un ou plusieurs avatars, le courriel vocal ou le courriel vidéo, la sonnerie, la sonnerie d'attente destinée à l'appelant, les messages d'attente, des effets audio et vidéo, etc. Toutes ces ressources peuvent être combinées pour définir une nouvelle interface de communication spécifique.

Le kit de communication 24 comprend les ressources de communication sélectionnées par le serveur 11, éventuellement associées à des données de présentation ou de communication générale. Il s'agit de ressources sous forme de codes qui peuvent être compilées à la volée ou simplement enregistrées. Ces ressources sont des éléments actifs qui vont de la simple activation d'une capture de micro ou de haut-parleur sans affichage jusqu'à une application de communication complète. Le kit comprend par exemple et entre autres des ressources 31 visant à adapter la capacité de l'appelant en vue de la communication, et d'autres portant sur le comportement d'appel 33.

On va maintenant présenter en référence à la figure 4 un système de communication selon l'invention. Ce système à liens de communication est basé sur une configuration client/serveur. Toutefois, il se distingue des systèmes de communication connus dans la mesure où le client est ici un navigateur Internet ayant des capacités multimédia.

Sur la figure 4, le bloc 8 associé à l'appelant constitue le côté client. L'appelant peut faire apparaître sur son écran des documents de types variés qui comprennent un lien 4 utilisé dans le système selon l'invention. Il peut s'agir de documents électroniques 40, de courriels 2 ou d'autres formats d'application 42. Il s'agira par exemple d'un document Word prévu pour une application Microsoft Word. De même, des sites Internet et des applications peuvent comprendre des liens de communication et ne pas requérir une redirection vers le navigateur web.

Le bloc 11 constitue le serveur de communication par liens. Il comprend tout d'abord un serveur web 50 capable d'interactions à distance avec des navigateurs web tels que le navigateur 52 de l'appelant 8. Le serveur 50 est le point d'entrée du lien 4. Ce dernier pointe donc avec son adresse URL vers le serveur web 50. Le serveur web 50 est compatible avec de nombreuses modalités de mise en oeuvre. On peut ainsi prévoir un accès limité à ce serveur ou l'associer à des pages de publicité ou à une fonction d'analyse de données de connexion concernant les appelants (log analytique).

Le serveur 11 comprend également un fournisseur de liens de communication 52. Ce module a notamment pour charge de réaliser les kits, capsules ou conteneurs de communication destinés à être envoyés en réponse à l'appelant. Il s'appuie à cette fin sur trois sources de données qui peuvent être enregistrées dans une ou plusieurs bases de données respectives. Le serveur 52 constituant le fournisseur de liens est ainsi associé à un registre de liens 54. Ce registre répertorie tous les liens mis en oeuvre dans le cadre du système. Il associe à un même identifiant d'appelé tous les liens qui sont associés à cet appelé.

La base 56 comprend la description des liens de communication telle qu'elle a été présentée en référence à la couche 22 de la figure 3.

Enfin, la base 58 comprend les ressources de communication susceptibles d'être fournies aux appelants. Un même lien peut être associé à plusieurs ressources en fonction des règles ou des modalités de communication choisies par l'appelé ou à son initiative.

En l'espèce, mais il s'agit d'une caractéristique optionnelle, le serveur 11 comprend en outre un serveur multimédia 60 capable de mettre en oeuvre en temps réel les protocoles de communication de certaines ressources de communication particulières. Le serveur 60 connecte les ressources de communication de l'appelant et de l'appelé. S'il n'est pas utilisé, la communication peut être établie entre eux selon un mode peer-to-peer.

Le bloc 10 constitue le navigateur web de l'appelé ou le client spécifique de l'appelé suivant les cas. Ce choix pour l'appelé n'implique pas de problèmes d'interopérabilité. L'appelé 10 dispose d'une interface de communication 62 pour sa communication avec l'appelant. Il dispose aussi d'une interface 64 de gestion des liens de communication avec le fournisseur 52. Cette interface lui permet notamment de créer de tels liens, de les supprimer ou d'effectuer des paramétrages ou des réglages concernant les règles et modalités attachées à ces liens. Il peut notamment agir pour modifier les modalités d'utilisateur formant la sous-couche 28 sur la figure 3. Il peut notamment définir ou modifier les règles associées à chaque lien.

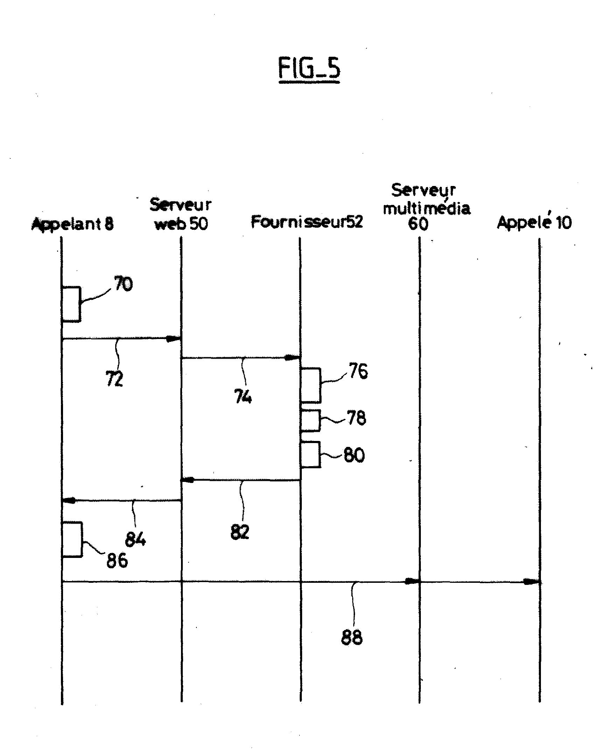

On va maintenant décrire en référence aux figures 4 et 5 la mise en oeuvre du procédé de l'invention au moyen du système de la figure 4. Cette mise en oeuvre nécessite une étape préliminaire de création des liens 4 de communication par les appelés potentiels 10. Ceux-ci créent donc les liens et les configurent dans le fournisseur 52 au moyen de l'interface 64 pour entrer et modifier les données.

On suppose maintenant que l'appelant 8 souhaite entrer en relation avec l'appelé 10. Pour cela, l'appelant clique sur le lien 4 du courriel 2 ou actionne indirectement ce lien de communication. Il s'agit de l'étape 70.

Cette action provoque l'envoi par le navigateur 52 de l'adresse URL associée au lien vers le serveur web 50 pointé par le lien. Il s'agit de l'étape 72.

A l'étape 74, le serveur 50 reçoit cette adresse et envoie l'identité du lien au fournisseur de liens de communication 52.

A l'étape 76, le fournisseur consulte le registre des liens 54 puis à l'étape 78 la description des liens 56. Il prend ainsi connaissance des règles de communication associées au lien 4. Ensuite, à l'étape 80, il sélectionne et obtient dans la base 58 une ou plusieurs ressources de communication qu'il est nécessaire d'envoyer à l'appelant pour que puisse être établie une connexion, voire une communication entre l'appelant et l'appelé. Il forme alors un kit de communication 24 avec ces ressources.

A l'étape suivante 82, le fournisseur 52 envoie le kit comprenant la ou les ressources au serveur 50 qui les transmet lui-même à l'appelant 8 au cours de l'étape suivante 84.

Ensuite, à l'étape 86, l'appelant 8 charge dans son ordinateur les ressources qu'il vient de recevoir dans le kit et les active.

Dans le présent exemple, il est alors mis en communication avec l'appelé 10 via le serveur multimédia 60 à l'étape 88. En fonction des modalités définies par l'appelé, l'appelant peut utiliser une messagerie instantanée, un appel vocal ou vidéo ou encore simplement recevoir un message d'absence de réponse. En effet, la mise en connexion de l'appelant avec l'appelé par le serveur multimédia 60 n'implique pas que la communication est effectivement établie entre les deux. C'est notamment le cas si l'appelé n'est pas disponible ou refuse la communication dans la mesure où les règles de mise en communication lui permettent ce type de possibilité.

Les communications entre le serveur 11 et l'appelant 8 ont lieu via un réseau tel que le réseau Internet qui n'a pas été illustré. Il en est de même pour les communications entre le serveur 11 et l'appelé 12. Pareillement, il est possible que les communications entre les différents organes 50, 54, 56, 58 et 60 du serveur 11 s'effectuent au moins en partie via un réseau de télécommunication tel qu'un réseau Intranet ou le réseau Internet.

On voit donc que, lors de la mise en oeuvre du procédé de l'invention, c'est l'appelé qui est à l'origine de la fourniture des ressources de communication à l'appelant. L'invention permet d'avoir une grande interopérabilité entre les utilisateurs du système. Elle permet à l'appelé de contrôler étroitement s'il veut être joint et si oui de quelle façon. Elle permet de combiner et de mixer des applications de communication et des applications web pour les composer entre elles.

L'invention permet d'effectuer des communications de toutes sortes, y compris des communications en temps réel avec une grande économie de moyens.

Bien entendu, on pourra apporter à l'invention de nombreuses modifications sans sortir du cadre de celle-ci.

## Revendications

1. Procédé de communication **caractérisé en ce qu'**un dispositif (52) prépare un kit (24) de connexion à un appelé (10) avec lequel un appelant prédéterminé (8) souhaite communiquer, ce kit étant fonction d'au moins un choix effectué par l'appelé, ledit kit comportant des ressources de communication nécessaires à l'appelant pour établir la communication avec l'appelé.

2. Procédé selon la revendication précédente dans lequel l'étape de préparation (80) a lieu après que l'appelant (8) a activé un lien (4) relatif à l'appelé (10).

3. Procédé selon la revendication précédente dans lequel un serveur (50) pointé par le lien (4) transmet un identifiant du lien à un dispositif (52).

4. Procédé selon l'une quelconque des revendications précédentes, dans lequel un dispositif (52) consulte des données relatives à des modalités de connexion de l'appelé (10).

5. Procédé selon l'une quelconque des revendications précédentes dans lequel un serveur (50) envoie le kit (24) à l'appelant (8).

6. Procédé selon l'une quelconque des revendications précédentes dans lequel un serveur de connexion (60) connecte l'appelant (8) à l'appelé (10).

7. Page (40, 2, 42) **caractérisée en ce qu'**elle comprend un lien (4) apte à déclencher la mise en oeuvre d'un procédé selon l'une quelconque des revendications précédentes.

8. Programme d'ordinateur **caractérisé en ce qu'**il comprend des instructions de code de programme pour l'exécution des étapes d'un procédé selon l'une quelconque des revendications 1 à 6 ou d'un procédé d'affichage sur un écran d'une page (40, 2, 42) selon la revendication précédente lorsque le programme est exécuté sur un ordinateur.

9. Support d'enregistrement de données **caractérisé en ce qu'**il comprend un programme selon la revendication précédente.

10. Procédé de mise à disposition sur un réseau de télécommunication d'un programme selon la revendication 8 en vue de son téléchargement.

11. Système de communication (11) **caractérisé en ce qu'**il comprend des moyens (58) pour préparer un kit (24) de connexion à un appelé (10) avec lequel un appelant prédéterminé (8) souhaite communiquer, ce kit étant préparé en fonction d'au moins un choix effectué par l'appelé.

12. Système selon la revendication précédente qui comprend un registre (54) reliant des identifiants de lien (4) et des appelés potentiels et de préférence plusieurs identifiants à un même appelé.

13. Système selon la revendication précédente qui comprend, pour chaque lien (4), des données relatives à des modalités de connexion de l'appelé (10) au moyen du lien.

14. Système selon l'une quelconque des revendications 11 à 13 qui comprend des ressources pour une connexion aux appelés potentiels (10).

15. Système selon l'une quelconque des revendications 11 à 14 apte à connecter l'appelant à l'appelé.
